# EUROPÄISCHE PATENTSCHRIFT

(11) **EP 3 475 592 B1**
(45) Veröffentlichungstag und Bekanntmachung des Hinweises auf die Patenterteilung: **16.09.2020**
(21) Anmeldenummer: 17730048.0
(22) Anmeldetag: 29.05.2017
(51) Int. Cl.: F16D 13/58, F16D 13/71, F16D 13/75

(54) **SELBSTNACHSTELLENDE KUPPLUNG**
SELF-ADJUSTING CLUTCH
EMBRAYAGE À RATTRAPAGE AUTOMATIQUE

(30) Priorität: 28.06.2016 DE 102016211604
(43) Veröffentlichungstag der Anmeldung: 01.05.2019
(73) Patentinhaber: Schaeffler Technologies AG & Co. KG, 91074 Herzogenaurach (DE)
(72) Erfinder: LAKSHMINARAYANAN, Saravanan, 76356 Weingarten (DE); BAERWALD, Benjamin, 76456 Kuppenheim (DE)
(86) Internationale Anmeldenummer: PCT/DE2017/100452
(87) Internationale Veröffentlichungsnummer: WO 2018/001407

(56) Entgegenhaltungen:
- EP-A2- 1 972 817
- WO-A1-2008/064634
- DE-A1- 19 718 839
- DE-A1- 19 911 667

## Beschreibung

Die Erfindung betrifft eine selbstnachstellende Kupplung mit einer Tellerfeder, die zwischen einer Nachstellvorrichtung und Kupplungsbelägen angeordnet ist.

Gattungsgemäße Reibungskupplungen mit einer selbstnachstellenden Nachstellvorrichtung sind beispielsweise aus der DE 42 39 291 B4 bekannt. Hierbei verspannt eine sich am Gehäuse abstützende Tellerfeder die Anpressplatte gegenüber der Gegendruckplatte und bildet mit dieser einen Reibschluss mit zwischen diesen verspannten Reibbelägen einer Kupplungsscheibe. Die Tellerfeder verspannt im neuen oder nachgestellten Zustand die Anpressplatte gegenüber der Gegendruckplatte an einem vorgegebenen Betriebspunkt. Die Tellerfeder wird an deren Innenumfang beispielsweise in Form von Tellerfederspitzen axial durch ein Betätigungssystem beaufschlagt und weist entlang dieses Ausrückwegs eine Kennlinie mit vorgegebener Tellerfederkraft unter Ausbildung eines Maximums auf. In der Zusammenwirkung mit der die Reibbeläge axial elastisch beabstandenden, gegen die Tellerfederkraft wirkenden Belagfederung sowie der die Anpressplatte gegenüber dem Gehäuse drehfest und axial verlagerbar haltenden Blattfederung, die ebenfalls entgegen der Tellerfederkraft wirksam ist, ergibt sich eine Ausrückkraftkennlinie über den Ausrückweg, die bei beginnender Trennung der Reibungskupplung stark ansteigende und am Übergang oder im Bereich des Betriebspunktes idealerweise ein Plateau oder sogar leicht abfallend ist. Auf diese Weise kann ein für einen das Betätigungssystem mittels eines Pedals betätigenden Fahrer günstiger Kraftverlauf erzielt werden.

Wird durch einen Verschleiß der Reibbeläge oder andere Effekte, beispielsweise Setzvorgänge und dergleichen ein Fehlabstand zwischen Gegendruckplatte und Anpressplatte an deren Betriebspunkt erzeugt, verkippt die Tellerfeder durch ihre geänderte Anstellung zwischen Gehäuse und Anpressplatte. Hierdurch ändert sich der Kraftverlauf der Ausrückkraft über den Ausrückweg, wobei die Ausrückkräfte zunehmen. Zum Ausgleich des Fehlabstands und Herstellung der ursprünglichen Tellerfederstellung ist zwischen der Anpressplatte und dem Gehäuse eine Nachstellvorrichtung in Form eines Verstellrings zwischen mit in Umfangsrichtung ansteigenden Rampen vorgesehen, der von einem in Umfangsrichtung wirksamen Energiespeicher, beispielsweise Druckfeder, angetrieben wird.

Aufgrund des Verschleißes der Reibbeläge kann es zu Kollisionen zwischen der Tellerfeder und dem Energiespeicher der Nachstellvorrichtung kommen, wodurch die Lebensdauer der selbstnachstellenden Kupplung verringert werden kann.

Es besteht daher das ständige Bedürfnis die Lebensdauer einer selbstnachstellenden Kupplung zu erhöhen und den Verschleißbereich der selbstnachstellenden Kupplung zu optimieren.

Eine Aufgabe der Erfindung ist es Maßnahmen für eine selbstnachstellende Kupplung aufzuzeigen, welche es ermöglichen die Lebensdauer zu erhöhen, den Verschleißbereich zu optimieren und benötigen Bauraum für eine selbstnachstellende Kupplung einzusparen.

Die Lösung der Aufgabe erfolgt erfindungsgemäß durch eine selbstnachstellende Kupplung mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Die Erfindung betrifft eine selbstnachstellende Kupplung mit einer Tellerfeder, die zwischen einer Nachstellvorrichtung und Kupplungsbelägen angeordnet ist, wobei die Nachstellvorrichtung über mindestens einen Energiespeicher, insbesondere eine Druckfeder, vorgespannt ist, wobei die Tellerfeder mindestens eine Aussparung umfasst zur teilweisen Aufnahme eines Umfangs eines Energiespeichers einer Nachstellvorrichtung der Kupplung.

Dabei kann die mindestens eine Aussparung an der Tellerfeder derart angeordnet werden, dass bei einem Einbau der Tellerfeder in eine selbstnachstellende Kupplung die Aussparung sich in Nachbarschaft zu den Energiespeichern, beispielsweise Druckfedern oder Zugfedern, der Nachstellvorrichtung, beispielsweise ein Rampenring, befinden. Dabei ist die mindestens eine Aussparung derart ausgebildet, dass in einem verschleißten Zustand der selbstnachstellenden Kupplung die Aussparung von den Energiespeicher weg weist, um eine Kollision mit dem sich im Verschleißzustand stärker aufstellenden Tellerfederzungen mit den Energiespeichern zu vermeiden. Insbesondere kann die mindestens eine Aussparung einen Umfang eines Energiespeichers zumindest teilweise aufnehmen.

Mit Hilfe einer solchen Tellerfeder kann die Lebensdauer einer selbstnachstellenden Kupplung erhöht werden. Weiterhin kann dadurch der Verschleißbereich einer selbstnachstellenden Kupplung optimiert beziehungsweise erhöht werden. Insbesondere kann benötigter Bauraum für eine selbstnachstellende Kupplung eingespart werden, wodurch eine Bauraumoptimierung ermöglicht wird.

Es ist bevorzugt, dass die Tellerfeder mindestens zwei Zungen umfasst, wobei die mindestens eine Aussparung auf den Zungen angeordnet ist.

Vorzugsweise umfasst die Tellerfeder mindestens zwei Zungen, wobei die mindestens eine Aussparung jeweils zwischen zwei benachbarten Zungen angeordnet ist.

In einer bevorzugten Ausführungsform sind die Aussparungen in die Tellerfeder gefräst oder eingeprägt. Auf diese Weise können die Aussparungen nachträglich auf eine bereits produzierte Tellerfeder hinzugefügt werden. Es kann somit eine Tellerfeder für verschiedene selbstnachstellende Kupplungen verwendet werden, wodurch sich die Lagerhaltung und die Produktion der Tellerfedern vereinfachen kann.

Es ist bevorzugt, dass die mindestens eine Aussparung der Tellerfeder eine Tiefe von größer 0 mm bis kleiner oder gleich 1 mm, vorzugsweise größer oder gleich 0,2 mm bis kleiner oder gleich 0,8 mm, insbesondere größer oder gleich 0,4 mm bis kleiner oder gleich 0,6 mm aufweist. Auf diese Weise kann eine einfache, insbesondere eine wirtschaftliche Lösung, zur Erhöhung der Lebensdauer der selbstnachstellenden Kupplung ermöglicht werden. Durch eine Erhöhung des Verschleißbereiches können gleichzeitig erweiterte technische Anforderungen für die selbstnachstellendende Kupplung ermöglicht werden. Beispielsweise kann ein ursprünglich auf 2,0 mm ausgelegter Verschleißbereich auf 2,5 mm modifiziert werden. Dadurch kann eine wirtschaftliche Lösung erzielt werden. Weiterhin kann auf diese Weise eine Kollision zwischen der Tellerfeder und des Energiespeichers, beispielsweise eine Druckfeder, und der Nachstellvorrichtung in Form eines Verstellrings vermieden werden. Insbesondere kann sich Bauraum in axialer Richtung einsparen lassen, da durch die teilweise Aufnahme des Energiespeichers durch die Aussparung in einem verschleißten Zustand der selbstnachstellenden Kupplung kein extra Abstand vorgehalten wird. Vorzugsweise durchdringt die mindestens eine Aussparung der Tellerfeder die gesamte Tellerfederdicke. Auf diese Weise kann die Bearbeitung zum Einfügen einer Aussparung vereinfacht werden. Anstatt eine definierte Tiefe beim Fräsen oder Prägen einzuhalten, kann die Aussparung die gesamte Dicke der Tellerfeder durchdringen.

Es ist bevorzugt, dass die Tellerfeder zwischen der Nachstellvorrichtung und einer Sensorvorrichtung zur Ermittlung eines Verschleißes der Kupplungsbeläge angeordnet ist. Die Sensorvorrichtung kann eine Sensorfeder, beispielsweise eine Sensortellerfeder sein.

Vorzugsweise ist eine Sensorvorrichtung zur Ermittlung des Verschleißes der Kupplungsbeläge zwischen der Nachstellvorrichtung und der Tellerfeder angeordnet. Die Sensorvorrichtung kann eine Sensorfeder, beispielsweise eine Sensortellerfeder sein.

Offenbart wird weiterhin ein Ersatzteilkit für eine selbstnachstellende Kupplung umfassend eine Tellerfeder, welche wie vorstehend ausgebildet oder weitergebildet sein kann mit mindestens einer Aussparung zur teilweisen Aufnahme eines Umfangs eines Energiespeichers einer Nachstellvorrichtung der Kupplung.

Mit Hilfe eines derartigen Ersatzteilkits kann eine selbstnachstellende Kupplung mit einer Tellerfeder ausgerüstet werden, welche wie vorstehend ausgebildet oder weitergebildet sein kann. Auf diese Weise kann die Lebensdauer einer mit dem Ersatzteilkit nachgerüsteten selbstnachstellenden Kupplung erhöht werden. Weiterhin kann dadurch der Verschleißbereich einer selbstnachstellenden Kupplung optimiert beziehungsweise erhöht werden. Insbesondere kann benötigter Bauraum für eine selbstnachstellende Kupplung eingespart werden, wodurch eine Bauraumoptimierung ermöglicht wird.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1: eine Draufsicht auf eine Tellerfeder;
- Fig. 2: eine Detailansicht der Tellerfeder der Fig.1;
- Fig. 3: eine Detailansicht einer Ausführungsform einer Kupplung im Neuzustand;
- Fig. 4: eine Detailansicht der Kupplung der Fig. 3 im verschleißten Zustand; und
- Fig. 5: einen Ausschnitt einer Schnittansicht der Kupplung der Fig. 4.

In den nachfolgenden Zeichnungen werden für die gleichen Bauteile die gleichen Bezugszeichen verwendet.

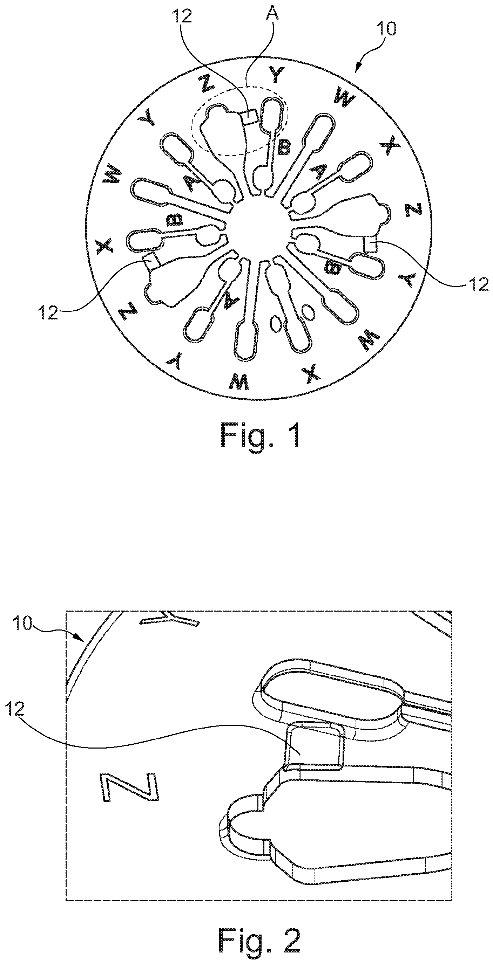

Fig. 1 zeigt eine Draufsicht auf eine Tellerfeder 10 für eine selbstnachstellende Reibungskupplung. Die Tellerfeder 10 weist eine Vielzahl an Tellerfederzungen auf. An den Tellerfederzungen, welche bei einem Einbau der Tellerfeder 10 in eine selbstnachstellende Kupplung in unmittelbarer Nähe zu den Energiespeichern, beispielsweise Druckfedern, der Nachstellvorrichtung angeordnet werden, weisen eine von den Energiespeichern, beispielsweise Druckfedern, wegweisende Aussparung 12 auf. Die Aussparung 12 kann durch Ausfräsung oder Prägung hergestellt werden und weist eine Tiefe von ungefähr 0,5 mm auf.

In Fig. 2 ist ein Ausschnitt des Details A der Fig. 1 in einer perspektivischen Darstellung dargestellt. Es ist erkennbar, dass die Aussparung 12 nicht durch die Zunge der Tellerfeder 10 geht, sondern lediglich aufgefräst oder angeprägt ist. Mit Hilfe der Aussparung 12 kann eine Kollision der Energiespeicher, wie Druckfedern, der Nachstellvorrichtung mit der sich im Verschleißzustand stärker aufstellenden Tellerfeder 10 vermieden werden.

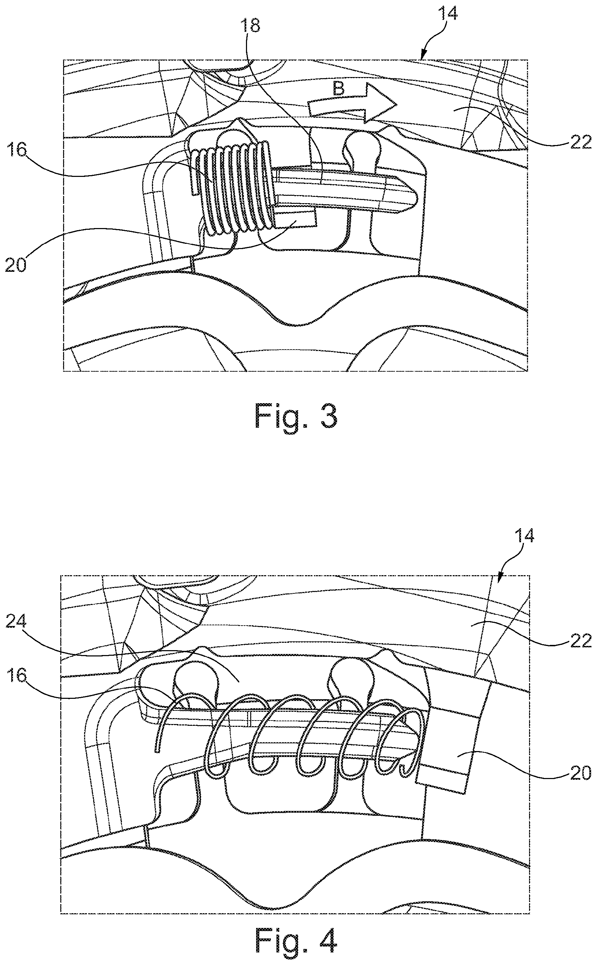

Fig. 3 zeigt eine Detailansicht einer Reibungskupplung 14 im Neuzustand. Die Reibungskupplung umfasst einen Energiespeicher 16, beispielsweise eine Druckfeder, welche auf einem Pin 18 eines Deckels angeordnet ist. Der Energiespeicher 16 drückt gegen eine Nachstellvorrichtung 20 in Form eines Rampenrings. Mit Hilfe der Nachstellvorrichtung 20 kann die Tellerfeder 22 bei Verschleiß nachgeführt werden. Die Nachführung erfolgt derart, dass unabhängig vom Verschleiß, beispielsweise ein Belagverschleiß der Kupplung, die Winkellage der Tellerfeder 22 und somit die Betätigungs- und Anpreßkräfte konstant bleiben. Realisiert wird der Verschleißausgleich, in dem die Tellerfeder 22 nicht, wie bei der konventionellen Kupplungsdruckplatte, fest am Kupplungsdeckel angenietet oder über Laschen eingehängt, sondern mit einer definierten Kraft, der Sensorkraft, axial gegen den Deckel verspannt wird. Zwischen Tellerfeder 22 und Kupplungsdeckel befindet sich die Nachstellvorrichtung 20 in Form eines Rampenrings, der in Rampen des Deckels eingreift und in Umfangsrichtung über Energiespeicher 16 angetrieben wird. Eine Sensorkraft zum Erfassen des Verschleißes wird so dimensioniert, dass sie normalerweise der Betätigungskraft widerstehen kann. Wird bei Verschleiß der Kupplungsbeläge die Betätigungskraft höher und reicht die Sensorkraft als Gegenkraft an der Tellerfeder 22 nicht mehr aus, bewegt sich die Tellerfeder 22 axial in Richtung Motor von der Deckelauflage weg. Das dabei entstehende Spiel wird über den vorgespannten Rampenmechanismus, der zwischen Tellerfeder 22 und Kupplungsdeckel angeordnet ist, ausgeglichen. Die Bewegung des Energiespeichers 16 zur Nachstellung ist in Fig. 3 mit dem Pfeil B dargestellt. Der Nachstellvorgang dauert so lange, bis die Betätigungskraft auf die Sensorkraft und damit auf das gewünschte Niveau abgesunken, und die ursprüngliche Tellerfeder-Winkellage wieder erreicht ist.

Fig. 4 zeigt einen Ausschnitt einer Detailansicht der Kupplung 14 im verschleißten Zustand. Die Nachstellvorrichtung 20 wurde durch den Energiespeicher 16 in eine Endposition überführt. Weiterhin ist erkennbar, dass die Tellerfeder 22 in unmittelbarer Nähe zu dem Energiespeicher 16 der Nachstellvorrichtung 20 eine Aussparung 24 aufweist. Die Aussparung 24 kann durch Ausfräsung oder Prägung hergestellt werden und weist eine Tiefe von ungefähr 0,5mm auf. Mit Hilfe der Aussparung 24 kann eine Kollision des Energiespeichers 16 der Nachstellvorrichtung20 mit der sich im Verschleißzustand stärker aufstellenden Tellerfeder 22 vermieden werden.

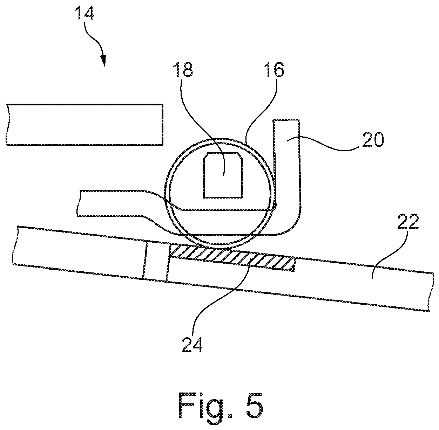

In Fig. 5 ist ein Ausschnitt einer schematischen Schnittansicht der Kupplung 14 dargestellt. Die Kupplung 14 ist im verschleißten Zustand dargestellt. Es ist erkennbar, dass aufgrund der Aussparung 24 in der Tellerfeder 22 der Energiespeicher 16 und die Nachstellvorrichtung 20 nicht die Tellerfeder 22 kontaktieren.

### Bezugszeichenliste

- 10: Tellerfeder
- 12: Aussparung
- 14: Kupplung
- 16: Energiespeicher
- 18: Pin
- 20: Nachstellvorrichtung
- 22: Tellerfeder
- 24: Aussparung
- A: Detail
- B: Bewegungsrichtung bei Verschleiß

## Patentansprüche

1. Selbstnachstellende Kupplung mit einer Tellerfeder (10, 22), die zwischen einer Nachstellvorrichtung (20) und Kupplungsbelägen angeordnet ist, wobei die Nachstellvorrichtung (20) über mindestens einen Energiespeicher (16), insbesondere eine Druckfeder, vorgespannt ist, **dadurch gekennzeichnet, dass** die Tellerfeder (10, 22) mindestens eine Aussparung (12, 24) umfasst zur teilweisen Aufnahme eines Umfangs des Energiespeichers (16) der Nachstellvorrichtung (20) der Kupplung.

2. Selbstnachstellende Kupplung nach Anspruch 1, **dadurch gekennzeichnet, dass** die Tellerfeder (10) mindestens zwei Zungen umfasst, wobei die mindestens eine Aussparung (12) auf den Zungen angeordnet ist.

3. Selbstnachstellende Kupplung nach Anspruch 1, dass die Tellerfeder (10, 22) mindestens zwei Zungen umfasst, wobei die mindestens eine Aussparung (12, 24) jeweils zwischen zwei benachbarten Zungen angeordnet ist.

4. Selbstnachstellende Kupplung nach einem der Ansprüche 1 bis 3, **dadurch gekennzeichnet, dass** die mindestens eine Aussparung (12, 24) in die Tellerfeder (10, 22) gefräst oder eingeprägt sind.

5. Selbstnachstellende Kupplung nach einem der Ansprüche 1 bis 4, **dadurch gekennzeichnet, dass** die mindestens eine Aussparung (12, 24) der Tellerfeder (10, 22) eine Tiefe von größer 0 mm bis kleiner oder gleich 1 mm, vorzugsweise größer oder gleich 0,2 mm bis kleiner oder gleich 0,8 mm, insbesondere größer oder gleich 0,4 mm bis kleiner oder gleich 0,6 mm aufweist.

6. Selbstnachstellende Kupplung nach einem der Ansprüche 1 bis 4, **dadurch gekennzeichnet, dass** die mindestens eine Aussparung (12, 24) der Tellerfeder (10, 22) die gesamte Tellerfederdicke durchdringt.

7. Selbstnachstellende Kupplung nach einem der Ansprüche 1 bis 6, **dadurch gekennzeichnet, dass** die Tellerfeder (10, 22) zwischen der Nachstellvorrichtung (20) und einer Sensorvorrichtung zur Ermittlung eines Verschleißes der Kupplungsbeläge angeordnet ist.

8. Selbstnachstellende Kupplung nach einem der Ansprüche 1 bis 6, **dadurch gekennzeichnet, dass** eine Sensorvorrichtung zur Ermittlung des Verschleißes der Kupplungsbeläge zwischen der Nachstellvorrichtung (20) und der Tellerfeder (10, 22) angeordnet ist.

## Claims

1. A self-adjusting clutch having a disc spring (10, 22), which is arranged between an adjusting device (20) and clutch linings, wherein the adjusting device (20) is preloaded via at least one energy store (16), in particular a compression spring, **characterised in that** the disc spring (10, 22) comprises at least one recess (12, 24) for partially receiving a circumference of the energy store (16) of the adjusting device (20) of the coupling.

2. The self-adjusting clutch according to claim 1, **characterised in that** the disc spring (10) comprises at least two tongues, wherein the at least one recess (12) is arranged on the tongues.

3. The self-adjusting clutch according to claim 1, **characterised in that** the disc spring (10, 22) comprises at least two tongues, wherein the at least one recess (12, 24) is arranged in each case between two adjacent tongues.

4. The self-adjusting clutch according to any one of claims 1 to 3, **characterised in that** the at least one recess (12, 24) is milled or stamped into the disc spring (10, 22).

5. The self-adjusting clutch according to any one of claims 1 to 4, **characterised in that** the at least one recess (12, 24) of the disc spring (10, 22) has a depth of greater than 0 mm to less than or equal to 1 mm, preferably greater than or equal to 0.2 mm to less than or equal to 0.8 mm, in particular greater than or equal to 0.4 mm to less than or equal to 0.6 mm.

6. The self-adjusting clutch according to any one of claims 1 to 4, **characterised in that** the at least one recess (12, 24) of the disc spring (10, 22) penetrates the entire disc spring thickness.

7. The self-adjusting clutch according to any one of claims 1 to 6, **characterised in that** the disc spring (10, 22) is arranged between the adjusting device (20) and a sensor device for determining wear of the clutch linings.

8. The self-adjusting clutch according to any one of claims 1 to 6, **characterised in that** a sensor device for determining the wear of the clutch linings is arranged between the adjusting device (20) and the disc spring (10, 22).

## Revendications

1. Embrayage à rattrapage de jeu automatique comprenant une rondelle Belleville (10, 22), laquelle est disposée entre un dispositif de rattrapage de jeu (20) et des garnitures d'embrayage, dans lequel le dispositif de rattrapage de jeu (20) est précontraint par au moins un accumulateur d'énergie (16), en particulier un ressort de compression, **caractérisé en ce que** la rondelle Belleville (10, 22) comprend au moins un évidement (12, 24) pour recevoir partiellement une circonférence de l'accumulateur d'énergie (16) du dispositif de rattrapage de jeu (20) de l'embrayage.

2. Embrayage à rattrapage de jeu automatique selon la revendication 1, **caractérisé en ce que** la rondelle Belleville (10) comprend au moins deux languettes, dans lequel l'au moins un évidement (12) est disposé sur les languettes.

3. Embrayage à rattrapage de jeu automatique selon la revendication 1, **caractérisé en ce que** la rondelle Belleville (10, 22) comprend au moins deux languettes, dans lequel l'au moins un évidement (12, 24) est disposé respectivement entre deux languettes adjacentes.

4. Embrayage à rattrapage de jeu automatique selon l'une quelconque des revendications 1 à 3, **caractérisé en ce que** l'au moins un évidement (12, 24) est fraisé ou estampé dans la rondelle Belleville (10, 22).

5. Embrayage à rattrapage de jeu automatique selon l'une quelconque des revendications 1 à 4, **caractérisé en ce que** l'au moins un évidement (12, 24) de la rondelle Belleville (10, 22) présente une profondeur supérieure à 0 mm à inférieure ou égale à 1 mm, de préférence supérieure ou égale à 0,2 mm à inférieure ou égale à 0,8 mm, en particulier supérieure ou égale à 0,4 mm à inférieure ou égale à 0,6 mm.

6. Embrayage à rattrapage de jeu automatique selon l'une quelconque des revendications 1 à 4, **caractérisé en ce que** l'au moins un évidement (12, 24) de la rondelle Belleville (10, 22) pénètre dans toute l'épaisseur de la rondelle Belleville.

7. Embrayage à rattrapage de jeu automatique selon l'une quelconque des revendications 1 à 6, **caractérisé en ce que** la rondelle Belleville (10, 22) est disposée entre le dispositif de rattrapage de jeu (20) et un dispositif capteur pour déterminer une usure des garnitures d'embrayage.

8. Embrayage à rattrapage de jeu automatique selon l'une quelconque des revendications 1 à 6, **caractérisé en ce qu'**un dispositif capteur pour déterminer l'usure des garnitures d'embrayage est disposé entre le dispositif de rattrapage de jeu (20) et la rondelle Belleville (10, 22).
